# EUROPÄISCHE PATENTSCHRIFT

(11) **EP 1 185 391 B1**
(45) Veröffentlichungstag und Bekanntmachung des Hinweises auf die Patenterteilung: **08.01.2003**
(21) Anmeldenummer: 00947837.1
(22) Anmeldetag: 08.06.2000
(51) Int. Cl.: B23C 5/10, B23B 31/11, B23B 31/02

(54) **WERKZEUG ZUR ZERSPANENDEN BEARBEITUNG**
MACHINING TOOL
OUTIL POUR USINAGE PAR ENLEVEMENT DE MATIERE

(30) Priorität: 15.06.1999 DE 29910468 U; 17.12.1999 DE 19960927
(43) Veröffentlichungstag der Anmeldung: 13.03.2002
(73) Patentinhaber: Pokolm, Franz-Josef, 33428 Harsewinkel (DE)
(72) Erfinder: Pokolm, Franz-Josef, 33428 Harsewinkel (DE)
(74) Vertreter: Strauss, H.-J., Dr.
(86) Internationale Anmeldenummer: EP0005291
(87) Internationale Veröffentlichungsnummer: WO00076705

(56) Entgegenhaltungen:
- DE-U- 8 223 278
- US-A- 5 899 642

## Beschreibung

Die Erfindung betrifft ein Werkzeug zur zerspanenden Bearbeitung, insbesondere von Werkstücken aus Stahl, wobei das Werkzeug als rotierendes Werkzeug ausgebildet, einen in eine Maschine oder eine Maschinenspindel einspannbaren Schaft aufweist, dessen freies Ende mit einem Messerkopf versehen ist, wobei an dem Schaft ein Zapfen angeformt ist, und der Messerkopf eine Bohrung als Zapfenaufnahme aufweist, wobei die Zapfenaufnahme mit einer engen Passung auf den Zapfen aufsetzbar und auf den Zapfen durch Kraftschluss festsetzbar ist.

Zerspanend arbeitende Werkzeuge sind Fräser, Bohrer, Drehstähle u. dgl. Diese Werkzeuge besitzen Schneidkanten die oftmals von eingesetzten Schneidplatten gebildet sind. Mit diesen Werkzeugen kann mehr oder weniger tief in ein Werkstück eingedrungen werden, wobei die Tiefe von der Steifigkeit und der Standfestigkeit des Werkzeugs abhängt. Bekannt ist. Messerkopf und Schaft mit einer Gewindeverbindung zusammenzufügen, wobei in aller Regel der Schaft mit einem Gewindeansatz und der Messerkopf mit einer korrespondierenden Gewindebohrung versehen ist. Miteinander verschraubt bilden sie das Werkzeug, das in eine Maschine bzw. in eine Maschinenspindel eingeschraubt, in das Material des Werkstücks eindringt. Solche Schäfte werden in aller Regel aus Werkzeugstahl hergestellt, um den Gewindezapfen wirtschaftlich fertigen zu können. Weiterhin sind aus dem Stand der Technik Verbindungen bekannt, wobei an dem Schaft ein Zapfen angeformt ist, wobei der Messerkopf eine Bohrung als Zapfenaufnahme aufweist, und die Zapfenaufnahme mit enger Passung auf den Zapfen aufsetzbar und auf den Zapfen mit Kraftschluss festsetzbar ist. Insbesondere diese Verbindungen zwischen Schaft und Werkzeugkopf haben sich soweit bewährt. Jedoch kann bei solchen Verbindungen ein genauer Rundlauf nicht sichergestellt werden. Auch wird der Schaft bei einem tiefen Eindringen des Werkzeugs in das Werkstück stark beansprucht, so dass sich der stählerne Schaft bei Zwischenfällen verbiegt, was zu Unwuchten führt, die besonders bei den üblichen, hohen Umdrehungszahlen Probleme bereitet und die zur Zerstörung der Maschine bzw. der Maschinenspindel führen kann.

Aus dem Stand der Technik gemäß der US 5,899,642 ist ein Werkzeug zur zerspanenden Bearbeitung bekannt. wobei das Werkzeug aus einem Schaft. einem Spannverbinder und einem Messerkopf besteht. Die Verbindung zwischen Spannverbinder und Messerkopf erfolgt durch eine Form-Kraftschlussverbindung, wobei der Messserkopf zunächst mit einem Werkzeug auf dem Spannverbinder festgelegt wird, bevor der Spannverbinder ebenfalls unter Einwirkung eines Werkzeugs an dem Schaft festgelegt wird. Bei dieser Ausbildung des Standes der Technik wird es als nachteilig angesehen, dass sich einerseits die Festlegung des Messerkopfes als sehr aufwendig darstellt, weil die Einbindung eines Spannverbinders erfoderlich ist, wobei andererseits durch den Einsatz eines Spannverbinders zusätzliche Unwuchten im Werkzeug ergeben können, was letzendlich zu Standzeitverkürzungen des Werkzeugs führt.

Somit hat sich die Erfindung die Aufgabe gestellt, ein gattungsgemä-Bes Werkzeug zur spanabhebenden Bearbeitung vorzuschlagen, bei dem diese Nachteile vermieden werden, wobei insbesondere eine Verbindung zwischen Werkzeugkopf und Schaft geschaffen werden soll, die eine verbesserte Standzeit des Werkzeugs in bzw. an einer Maschinenspindel gewährleistet.

Diese Aufgabe wird erfindungsgemäß dadurch gelöst, dass der Schaft einschließlich des Zapfens einstückig ausgebildet ist, wobei der ZapfendesSchaftes undkorrespondierend dazu die Bohrung des Messerkopfes zur Herstellung einer Formschluss- und einer Kraftschlussverbindung jeweils einen Gewindebereich und einen Presspassungsbereich aufweisen und der Presspassungsbereich des Schaftes mit einer Überbestimmung zum thermischen Aufschrumpfen des Presspassungsbereichs des Messerkopfes versehen ist. In Folge der Kombination von zwei seriell angeordneten Verbindungsarten zwischen dem Werkzeugschaft und dem Messerkopf wird eine Verbindung geschaffen, die insbesondere den Beanspruchungsarten des Messerkopfes in dem zu schneidenden Material am besten gerecht wird. Denn in Folge der einerseits vorgesehenen Gewindeverbindung ergibt sich zwischen dem mit dem Schaft direkt verbundenen Zapfen und Messerkopf ein Formschluss, der bei ausgeübtem Druck in Axial- und Radialrichtung des Werkzeuges die hinreichende Stabilität gewährleistet, wobei andererseits die Reibschlussverbindung, hergestellt durch thermisches Aufschrumpfen, den Gewindebereich gegen Selbstlösen sichert. Diese in sich abgestimmte Verbindungskombination, die in unmittelbarer Verbindung zum Schaft steht, verhindert einerseits das Selbstlösen des Messerkopfes von dem Schaft, wobei andererseits der Messerkopf aufgrund der Presspassung an dem Schaft axzentrisch gehalten wird. Ein Unwuchtlaufen, wie es bei gewöhnlichen Gewindeverbindungen der Fall war, wird dadurch ausgeschlossen. Die Kombination in der Verbindung zwischen Schaft und Messerkopf führt somit zu wesentlich höheren Standzeiten des Werkzeugs. Die Presspassungsbereiche selbst können dabei entweder zylindrisch oder konisch ausgebildet sein.

Nach einer Weiterbildung der Erfindung ist der Schaft einschließlich des Zapfens einstückig aus Hartmetall und/oder Schwermetall und der Messerkopf aus Stahl, Titan o.dgl. gefertigt. Um die erfindungsgemäße Verbindung herzustellen, ist die Verbindung mittels eines thermischen Verfahrens herstellbar und wieder lösbar. Hierbei wird zunächst der Messerkopf auf den Schaft derart aufgesetzt, wobei das Gewinde erst in Eingriff gelangt, wenn der Messerkopf unter thermischer Beeinflussung steht, wobei der Messerkopf auf ein Maß erwärmt wird, so dass er dann auf den Bereich der Presspassung, die mit einem Überstimmungsbereich versehen ist, aufgeschraubt werden kann. In Folge der unterschiedlichen Ausdehungskoeffizienten ergibt sich im Rahmen des thermischen Verfahrens eine einfach herzustellende Verbindung. Die, sofern dies gewünscht wird, auch unter entsprechender thermischer Beeinflussung wieder leicht gelöst werden kann, so dass insbesondere der Schaft einer Wiederverwendung zugeführt werden kann.

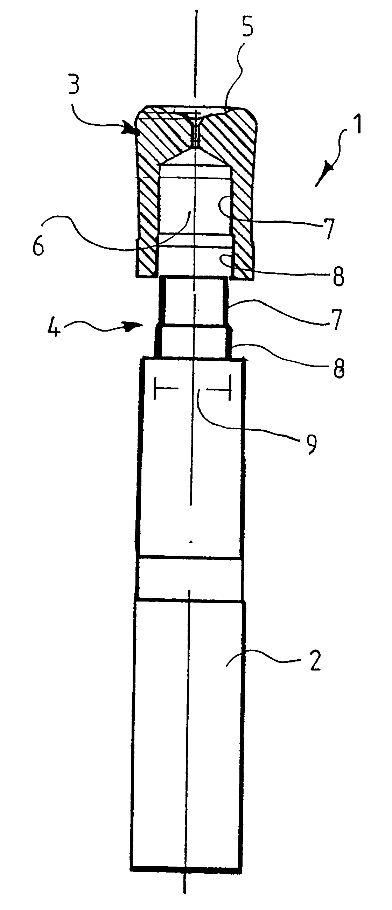

Ein Ausführungsbeispiel der Erfindung wird anhand der nachstehend einzigen Figur näher erläutert.

Die Figur zeigt in der Seitenansicht ein Werkzeug 1 mit teilweise geschnittenem Messerkopf 5, welches zur zerspanenden Bearbeitung, insbesondere von Werkstücken aus Stahl, bestimmt ist. Dabei ist das Werkzeug 1 als rotierendes Werkzeug ausgebildet. Das Werkzeug 1 weist dabei einen in eine Maschine oder eine Maschinenspindel einspannbaren Schaft 2 auf, dessen freies Ende mit einem Werkzeugkopf 3 versehen ist. An dem Schaft 2 ist ein Zapfen 4 angeformt, wobei der Messerkopf 5 eine Bohrung 6 als Zapfenaufnahme aufweist. Die Zapfenaufnahme ist mit enger Passung auf den Zapfen 4 aufsetzbar und auf den Zapfen 4 durch Kraftschluss festsetzbar. Erfindungsgemäß wird dabei vorgeschlagen, dass der Zapfen 4 des Schaftes 2 und korrespondierend dazu die Bohrung 6 des Messerkopfes 5 zur Herstellung einer Formschlussund einer Kraftschlussverbindung in Kombination jeweils einen Gewindebereich 7 und einen Presspassungsbereich 8 aufweisen, und der Presspassungsbereich 8 des Zapfens 4 mit einer Überbestimmung 9 zum Aufschrumpfen des Presspassungsbereichs 8 des Messerkopfes 5 versehen ist. Die Presspassungsbereiche 8 selbst können dabei entweder zylindrisch oder konisch ausgebildet sein.

Der Schaft 2 einschließlich des Zapfens 4 ist dabei einstückig aus Hartmetall und/oder Schwermetall und der Messerkopf 5 aus Stahl, Titan o.dgl. gefertigt. Die erfindungsgemäße Verbindung ist dabei mittels eines thermischen Verfahrens herstellbar und wieder lösbar. Dabei wird im Bereich der Verbindung der Messerkopf 5 derart erwärmt, dass er im erwärmten Zustand über den Presspassungsbereich 8 des Zapfens 4 mit seiner Überbestimmung 9 derart verschraubt werden kann, dass die Gewindegänge von Zapfen 4 und Messerkopf 5 in Eingriff gelangen. Wird die Verbindung abgekühlt, so ergibt sich für den Übergang von dem Schaft 2 zu dem Messerkopf 5 eine Kombinationsverbindung, die einerseits aus einer Formschluss- und einer Kraftschlussverbindung gebildet wird.

## Patentansprüche

1. Werkzeug zur zerspanenden Bearbeitung insbesondere von Werkstücken aus Stahl, wobei das Werkzeug als rotierendes Werkzeug ausgebildet, einen in eine Maschine oder eine Maschinenspindel einspannbaren Schaft aufweist, dessen freies Ende mit einem Messerkopf versehen ist, wobei an den Schaft ein Zapfen angeformt ist, und der Messerkopf eine Bohrung als Zapfenaufnahme aufweist, wobei die Zapfenaufnahme mit enger Passung auf den Zapfen aufsetzbar und auf den Zapfen durch Kraftschluß festsetzbar ist, **dadurch gekennzeichnet, dass** der Schaft (2) einschließlich des Zapfens (4) einstükkig ausgebildet ist, wobei der Zapfen (4) des Schaftes (2) und korresspondierend dazu die Bohrung (6) des Messerkopfes (3) zur Herstellung einer Formschluss- und einer Kraftschlussverbindung jeweils einen Gewindebereich (7) und einen Presspassungsbereich (8) aufweisen, wobei der Presspassungsbereich (8) des Schaftes (2) mit einer Überbestimmung (9) zum thermischen Aufschrumpfen des Presspassungsbereichs (8) des Messerkopfes (3) versehen ist.

2. Werkzeug nach Anspruch 1, **dadurch gekennzeichnet, dass** die Presspassungsbereiche (8) entweder zylindrisch oder konisch ausgebildet sind.

3. Werkzeug nach Anspruch 1. **dadurch gekennzeichnet, dass** der Schaft (2) einschließlich des Zapfens (4) aus Hartmetall und/oder Schwermetall und der Messerkopf (3) aus Stahl, Titan o.dgl. gefertigt ist.

4. Werkzeug nach den Ansprüchen 1 bis 3, **dadurch gekennzeichnet, dass** die Verbindung mittels eines thermischen Verfahrens herstellbar und wieder lösbar ist.

## Claims

1. Tool for machining of, in particular, workpieces made of steel, wherein the tool, designed as a rotating tool, has a shank which can be clamped in a machine or a machine spindle, the free end of which shank is provided with a cutter, wherein a journal is formed on the shank and the cutter has a bore as journal recipient, wherein the journal recipient can be placed on the journal with a tight fit and fixed onto the journal by frictional contact, ***characterised in that*** the shank (2) including the journal (4) is designed in one piece, wherein in order to make a positive and a frictional connection, the journal (4) of the shank (2) and corresponding thereto the bore (6) of the cutter (3) each have a threaded region (7) and a press-fit region (8), wherein the press-fit region (8) of the shank (2) is provided with an oversizing (9) for thermal shrinking-on of the press-fit region (8) of the cutter (3).

2. Tool as claimed in Claim 1, ***characterised in that*** the press-fit regions (8) are either cylindrical or conical in shape.

3. Tool as claimed in Claim 1, ***characterised in that*** the shank (2) including the journal (4) is made of metal carbide and/or heavy metal and the cutter (3) is made of steel, titanium or the like.

4. Tool as claimed in Claims 1 to 3, ***characterised in that*** the connection can be made and unmade by means of a thermal technique.

## Revendications

1. Outil pour l'usinage, avec formation de copeaux, notamment de pièces à usiner en acier, l'outil agencé en tant qu'outil rotatif comportant un arbre pouvant être serré dans une machine ou une broche de machine et dont l'extrémité libre est pourvue d'une tête de coupe, dans lequel un embout est formé sur l'arbre, et la tête de coupe comporte un perçage en tant que logement de l'embout, et dans lequel le logement de l'embout peut être emmanché sur l'embout selon un ajustement serré et peut être fixé sur l'embout au moyen d'une liaison de force, **caractérisé en ce que** l'arbre (2) y compris l'embout (4) est agencé d'un seul tenant, l'embout (4) de l'arbre (2) et le perçage (6), qui lui correspond, de la tête de coupe (3) possédant chacun, pour l'établissement d'une liaison par formes complémentaires et d'une liaison de force, une partie filetée (7) et une partie d'ajustement serré (8), la partie d'ajustement serré (8) de l'arbre (2) présentant une surdétermination (9) pour l'emmanchement avec contraction thermique de la partie d'ajustement serré (8) de la tête de coupe (3).

2. Outil selon la revendication 1, **caractérisé en ce que** les parties d'ajustement serré (8) sont réalisées avec une forme cylindrique ou conique.

3. Outil selon la revendication 1, **caractérisé en ce que** l'arbre (2) est réalisé, y compris l'embout (4), en un métal dur et/ou en un métal lourd et la tête de coupe (3) est réalisée en acier, en titane ou analogue.

4. Outil selon les revendications 1 à 3, **caractérisé en ce que** la liaison peut être établie et à nouveau supprimée à l'aide d'un procédé thermique.
